# EUROPEAN PATENT SPECIFICATION

(11) **EP 2 751 921 B1**
(45) Date of publication and mention of the grant of the patent: **28.10.2020**
(21) Application number: 12780797.2
(22) Date of filing: 21.09.2012
(51) Int. Cl.: H02P 7/29, B60H 1/00

(54) **DEVICE AND METHOD FOR CONTROLLING VENTILATION ON BOARD VEHICLES**
VERFAHREN UND VORRICHTUNG ZUR STEUERUNG DER BELÜFTUNG IN FAHRZEUGEN
PROCÉDÉ ET DISPOSITIF DE CONTRÔLE DE LA VENTILATION À BORD DE VÉHICULES

(30) Priority: 30.09.2011 IT MO20110250
(43) Date of publication of application: 09.07.2014
(73) Proprietor: Meta System S.p.A., 42124 Reggio Emilia (IT)
(72) Inventor: SIMONAZZI, Giuseppe, 42123 Reggio Emilia (IT); LASAGNI, Cesare, 42123 Reggio Emilia (IT)
(74) Representative: Brunacci, Marco
(86) International application number: PCT/IB2012/001847
(87) International publication number: WO 2013/045992

(56) References cited:
- EP-A1- 0 573 265
- FR-A1- 2 784 818
- US-A- 3 806 787
- US-A- 4 074 175
- US-A1- 2008 181 586

## Description

### Technical Field

The present invention relates to a device and a method for adjusting ventilation on board vehicles or the like, in particular for adjusting the speed of fan in air conditioning systems.

### Background Art

The use is known, on board vehicles, of adjustment devices suitable for adjusting the intensity of the ventilation, in particular in air conditioning systems inside vehicles.

The adjustment devices of known type, in particular, are electrically connected to one or more commands generally present on the dashboard of the vehicle and which can be operated by the driver or by one of the passengers.

For example, by means of the operation of such command, the speed of the conditioning system fan can be directly selected, or the desired temperature can be selected, allowing the automatic adjustment of the fan speed according to the temperature determined inside the vehicle.

The adjustment devices of known type generally comprise an input interface connectable to the above-mentioned command, an output interface connectable to the electric motor of the fan and a control unit connected to the input interface and to the output interface and suitable for generating a supply output current of the fan electric motor according to the input command signal. Variations of the generated output current therefore involve changes in the fan rotation speed. French patent document FR 2 784 818, published on 21.04.2000, discloses a vehicle ventilation system of prior art.

It is further known that the adjustment devices have a correction unit suitable for operating dynamically in case of undesired changes in the output current, therefore limiting such changes.

Nevertheless, the need is known of guaranteeing an output current/voltage which represents an adequate compromise between the minimum current that has to be supplied to the electric motor of the fan to achieve optimum performance levels and the maximum absorbable current.

### CONFIRMATION COPY

The latter, in particular, corresponds to a maximum absorbable current which must not be exceeded and which is generally indicated by the manufacturer. Consequently, the adjustment device must provide the minimum current value required by the motor (e.g., 26 A) and, at the same time, must not provide more than the maximum current value indicated by the manufacturer (e.g., 28 A). Such object can be achieved by means of a lower output current tolerance, obtainable, e.g., using top-quality electronic circuits and components to make the adjustment device.

This does however involve an excessively high cost of the adjustment device itself.

Alternatively, the output current of the adjustment device can be set manually. Such solution nevertheless negatively affects the speed and reliability of the automation process, thus raising the total cost of the adjustment device itself.

### Description of the Invention

The main object of the present invention is to provide a device and a method for adjusting ventilation on board vehicles or the like which allow simple and quick adjustment of the output current/voltage according to both the minimum current required by the electric motor to be operated, and the maximum current absorbable by the electric motor itself.

Another object of the present invention is to provide a device and a method for adjusting ventilation on board vehicles or the like which allow to overcome the mentioned drawbacks of the state of the art in the ambit of a simple, rational, easy and effective to use as well as low cost solution.

The above objects are achieved by the present device for adjusting ventilation on board of vehicles according to claim 1.

The above objects are achieved by the present method for adjusting the ventilation on board of vehicles according to claim 3.

### Brief Description of the Invention

Other characteristics and advantages of the present invention will become more evident from the description of a preferred, but not sole, embodiment of a device and a method for adjusting ventilation on board vehicles or the like, illustrated purely as an example but not limited to the annexed drawings in which:
figure 1 is a general block diagram of the device according to the invention;
figure 2 is an electric diagram which shows in detail a particular embodiment of the adjustment unit of the device according to the invention.

### Embodiments of the Invention

With particular reference to such figures, globally indicated by D is a device for adjusting ventilation on board vehicles or the like.

The device D comprises a control unit C connectable to a command element E of a ventilation system on a vehicle.

The device D is furthermore connectable to a ventilation device V on the vehicle.

For example, the device D can be used to adjust a ventilation device V composed of a fan in air conditioning systems on board a vehicle.

Furthermore, the command element E can be composed of a conventional pushbutton panel or knob on the vehicle dashboard, which can be operated by the driver or by one of the passengers.

For example, by means of the operation of such command element E, the speed can be directly selected of the fan V of the conditioning system, or the required temperature can be selected, allowing the automatic adjustment of the speed of the fan V according to the temperature read inside the vehicle.

The fitting cannot however be ruled out of the device D to different ventilation devices V installed on board a vehicle.

The control unit C has generation means of an output current lout for supplying the fan V according to an input signal Sin generated by the command element E.

The generation means of the output current are not shown in the illustrations inasmuch as these are of known type and can be made by means of a suitable power circuit.

In particular, the device D is connected to the electric motor which drives the fan V and the output current Iout generated is the power supply current of such electric motor.

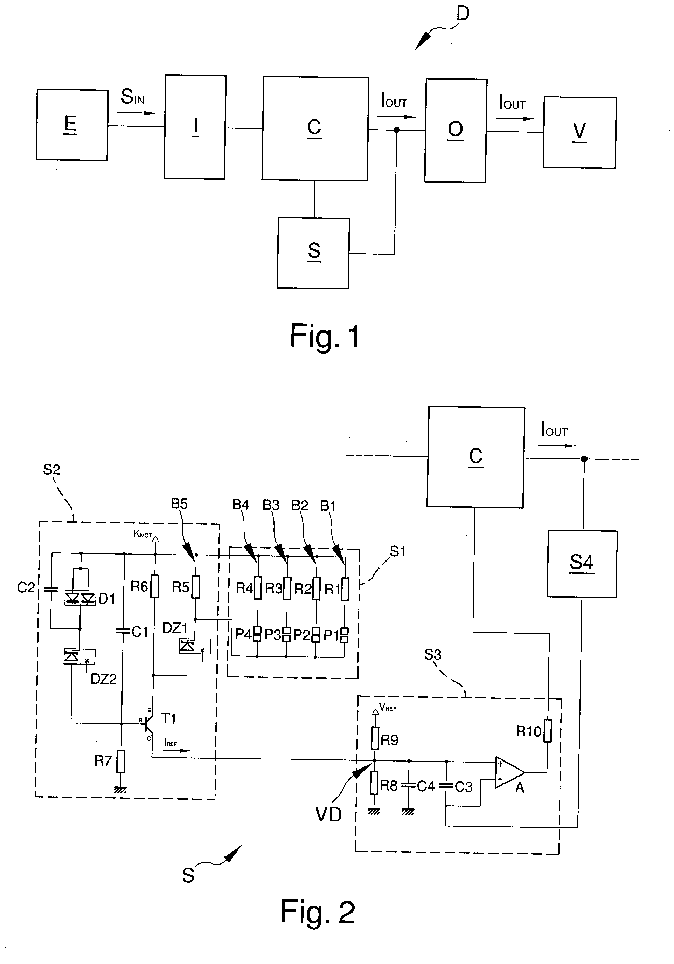

The device D also has an input interface connectable to the command element E, schematized in figure 1 with the block I, and an output interface connectable to the electric motor of the fan V, schematized in figure 1 with the block O. Both the input interface I and the output interface O can be made by means of suitable power circuits of the conventional type.

Advantageously, the device D comprises an adjustment unit S connected to the control unit C and suitable for adjusting the output current lout according to both the minimum current required to supply the fan V and the maximum current absorbable by the fan V.

In particular, it is pointed out that by the expression "minimum current required" is meant the intensity of the minimum supply current of the electric motor (or of the electric actuator in general) which drives the fan V during normal operation.

The minimum current required by the electric motor is therefore the minimum current needed to be supplied to the electric motor of the fan V to have optimum performance levels.

It is further pointed out that by the expression "maximum absorbable current" is meant the maximum current value which must not be exceeded and which is generally indicated by the manufacturer.

Consequently, the adjustment unit S of the device D ensures the minimum current value required by the motor and, at the same time, prevents exceeding the maximum current value set by the manufacturer.

As shown in figure 2, the adjustment unit S comprises at least one correction power circuit, indicated altogether by the reference S1, suitable for correcting the output current lout according to the minimum current required and to the maximum current absorbable by the electric motor of the fan V.

In point of fact, the correction power circuit S1 allows changing the intensity of the output current Iout so as to ensure the minimum current value required by the motor and, at the same time, prevent exceeding the maximum current value set by the manufacturer.

With reference to the particular embodiment shown in figure 2, the correction power circuit S1 comprises four branches B1, B2, B3 and B4 normally open and arranged in parallel to each other.

In particular, each of the branches B1, B2, B3 and B4 comprises a respective electric resistor R1, R2, R3 and R4 of predetermined value and a respective closing means P1, P2, P3 and P4 of the branch.

Different embodiments of the correction power circuit S1 cannot however be ruled out having, e.g., a different number of branches, each of which having a different number of resistors or of other electric components.

The closing of one or more of such branches B1, B2, B3 and B4 allows varying the intensity of the output current lout of the device D according to the intensity of the current required to supply the fan V.

Usefully, the resistors R1, R2, R3 and R4 have different values the one from the other so as to allow different changes in intensity of the output current lout. This way, even fine adjustment can be made of the output current lout by means of low-cost electronic components.

For example, in a preferred embodiment, the values of the resistors R1, R2, R3 and R4 can be 70 KΩ, 20 KΩ, 39 KΩ and 10 KΩ respectively.

In a preferred embodiment, shown in figure 2, the closing means PI, P2, P3 and P4 are composed of respective pairs of pads, separated the one from the other and connectable by soldering or the like.

By means of a simple soldering operation, therefore, one or more of the branches B1, B2, B3, and B4 can be closed and the output current Iout consequently changed.

Usefully, the adjustment unit S of the device D comprises a generation power circuit of a reference current Iref, indicated altogether in figure 2 by the reference S2.

The adjustment unit S of the device D also comprises a comparison power circuit S3 between the output current Iout and the reference current Iref, connected to the generation power circuit S2 and to the control unit C.

In particular, the comparison power circuit S3 comprises means for varying the output current Iout according to the difference found between the output current Iout and the reference current Iref.

In point of fact, the comparison power circuit S3 is suitable for operating to offset and therefore to reduce undesired changes in the output current lout which would lead to undesired changes in the rotation speed of the fan V.

The generation power circuit S2 is connected to the correction power circuit S1 and the closing of one or more of the branches B1, B2, B3 and B4 by means of the soldering of one or more of the respective pads P1, P2, P3 and P4 allows varying the intensity of the reference current Iref, so as to permit the adjustment of the output current Iout to be supplied according to the minimum supply current required by the electric motor of the fan V and to the maximum current absorbable by such electric motor.

In particular, with reference to the embodiment of the device D shown in figure 2, the generation circuit S2 comprises a branch B5 having an electric resistor R5 of predetermined value and arranged parallel to the branches B1, B2, B3 and B4 of the correction circuit.

As shown in figure 2, the generation circuit S2 has a supply voltage preferably equal to the electric motor differential voltage Kmot.

This way, in fact, the reference current Iref varies according to the voltage at the heads of the electric motor, following the absorption curve of the electric motor itself.

Furthermore, the generation circuit S2 comprises a resistor R6 connected to the branch B5 with interposition of a zener diode DZ1, a transistor T1 with bipolar junction of pnp type with the emitter E connected to the resistor R6 and to the anode of the zener diode DZ1, the base B connected to a saturation circuit and the collector C connected to the input of the comparison power circuit S3.

The saturation circuit, which comprises a zener diode DZ2, a pair of diodes D1, a condenser C1, a condenser C2 and a resistor R7, is suitable for bringing to saturation the transistor Tl, which is normally used as a closed switch to allow the flow of the reference current Iref towards the comparison power circuit S3. Different embodiments of the generation circuit S2 cannot however-be-ruled out wherein different electric components and different connections between such components are used.

The comparison power circuit S3 comprises a comparator element A having a first input connected to the output of the control unit C, a second input connected to the output of the generation circuit S2 of the reference current Iref and an output operatively connected to the control unit C.

The comparator element A is suitable for generating a correction current/voltage in correspondence to its output according to the difference between the output current lout and the reference current Iref detected in correspondence to the first and second input, respectively.

Such correction current/voltage is suitable for changing the output current lout. A suitable reference current Iref, therefore, allows changing the output current Iout according to the minimum supply current required by the electric motor of the fan V, keeping it at the same time below the maximum current absorbable by the electric motor itself.

With particular reference to the embodiment shown in figure 2, the comparator element A is composed of a differential amplifier having a first inverting input connected to the output of a detection unit S4 of the output current Iout, a second non-inverting input connected to the output of the generation circuit S2 of the reference current Iref and an output operatively connected to the control unit C.

In particular, the detection unit S4 is suitable for detecting the output current Iout from the output of the control unit C and for generating on the inverting input of the differential amplifier A a voltage proportionate to such output current lout.

The comparison circuit S3 also comprises a voltage divider VD arranged downstream of the generation circuit S2, having two resistors R8 and R9 in series between a reference voltage Vref and the ground, which has the output connected to the non-inverting input of the differential amplifier A.

The comparison circuit S3 also comprises a condenser C3 between the two inputs of the differential amplifier A and a condenser C4 in parallel with the resistance R8.

Finally, the comparison circuit S3 comprises a resistor R9 between the output of the differential amplifier A and the control unit C.

Different embodiments of the comparison circuit S3 cannot however be ruled out wherein different electric components and different connections between such components are used.

The method for adjusting ventilation on board vehicles or the like according to the invention is described below.

The method according to the invention comprises the step of generating the output current lout supplying the motor of the fan V, by means of the control unit C and according to the input signal Sin coming from the command element E.

Advantageously, the method according to the invention comprises the following steps:
- measuring the output current lout at the output of the device D and on the load made up of the electric motor of the fan V or of a load equivalent to it;
- comparing the output current Iout with the minimum current required to supply the electric motor of the fan V and with the maximum current absorbable by the electric motor;
- correcting the output current Iout according to such minimum required supply current and maximum absorbable current, by means of the adjustment unit S of the control device D.

In particular, such correction can be made by closing one or more branches B1, B2, B3 and B4 of the correction power circuit S1.

Usefully, the closing of one or more of such branches B1, B2, B3 and B4 can be done in a simple and quick way by soldering together one or more of the pads P1, P2, P3 and P4 on each of the branches.

The method according to the invention, furthermore, comprises the following steps:
- generating the reference current Iref by means of the generation power circuit S2;
- detecting the difference between the output current lout and the reference current Iref by means of the comparison power circuit S3;
- varying the output current Iout according to the detected difference, by means of the comparison power circuit S3.

It has in point of fact been ascertained how the described invention achieves the proposed objects.

In particular, the fact is underlined that the device and the method according to the invention allow simple and quick adjustment of the output current/voltage according to both the minimum current required by the electric motor to be controlled and the maximum current absorbable by the electric motor itself.

In particular, the use of the correction power circuit having several resistors of different entity the one from the other, associable in a different way with one another, allows obtaining an ample set of output current values with a limited number of low-cost electronic components.

Furthermore, the connection of the resistors by means of a simple soldering allows considerably increasing the automation of the adjustment device manufacturing process.

## Claims

1. A device (D) for adjusting ventilation on board of vehicles, the device comprising at least one control unit (C) connectable to at least one command element (E) of a ventilation system on a vehicle and to at least one ventilation device (V) of said system, said control unit (C) having generation means for generating an output current (Iₒᵤₜ) for supplying said ventilation device (V) according to at least one input signal (Sᵢₙ) coming from said command element (E), the device **characterized by** that the device comprises at least one adjustment unit (S) connected to said control unit (C) and configured for adjusting said output current (Iₒᵤₜ) according to the minimum current required to supply said ventilation device (V) and to the maximum current absorbable by said ventilation device (V), wherein said adjustment unit (S) comprises:
- a generation power circuit (S2) for generating a reference current (I_{ref});
- a correction power circuit (S1) connected to said generation power circuit (S2) and comprising at least two branches (B1, B2, B3, B4) normally open and arranged in parallel to each other, wherein each of said branches (B1, B2, B3, B4) has an electric resistor (R1, R2, R3, R4) of different values the one from the other and closing means (P1, P2, P3, P4) of the branch (B1, B2, B3, B4), wherein at least one of said branches (B1, B2, B3, B4) is configured to be closed through said closing means (P1, P2, P3, P4) for varying said reference current (I_{ref}) according to the minimum current required to supply said ventilation device (V) and to the maximum current absorbable by said ventilation device;
- a comparison power circuit (S3) for comparing said output current (Iₒᵤₜ) and said reference current (I_{ref}), connected to said generation power circuit (S2) of the reference current (I_{ref}) and to said control unit (C), wherein said comparison power circuit (S3) comprises means for varying said output current (Iₒᵤₜ) according to said difference found between said output current (Iₒᵤₜ) and said reference current (I_{ref}).

2. The device (D) according to claim 1, **characterized by** that said generation power circuit (S2) of the reference current (I_{ref}) comprises at least a branch (B5) having an electric resistor (R5) of predetermined value arranged in parallel to said at least one branch (B1, B2, B3, B4) of the correction power circuit (S1).

3. A method for adjusting ventilation on board of vehicles, the method comprising the step of generating at least an output current (Iₒᵤₜ) for the supply of a ventilation device (V) of the ventilation system of a vehicle, according to at least an input signal (Sᵢₙ) coming from one command element (E) of said system, by means of at least one control unit (C) connected to said command element (E) and to said ventilation device (V), the method **characterized by** the steps of:
- measuring said output current (lout);
- comparing said output current (Iₒᵤₜ) with the minimum current required to supply said ventilation device (V) and with the maximum current absorbable by said ventilation device (V);
- correcting said output current (Iₒᵤₜ) according to said minimum current required and to said maximum absorbable current, by means of at least an adjustment unit (S) of said control device;
- generating at least a reference current (I_{ref});
- closing at least one branch (B1, B2, B3, B4) normally open of a correction power circuit (S1) of said adjustment unit (S) for varying said reference current (I_{ref}) according to said minimum current required and to said maximum absorbable current, wherein said correction power circuit (S1) comprises at least two branches (B1, B2, B3, B4) normally open and arranged in parallel to each other, each of said branches (B1, B2, B3, B4) having an electric resistor (R1, R2, R3, R4) of different values the one from the other;
- detecting the difference between said output current (Iₒᵤₜ) and said reference current (I_{ref});
- varying said output current (Iₒᵤₜ) according to said detected difference.

4. The method according to claim 3, **characterized by** that said step of closing said at least one branch (B1, B2, B3, B4) comprises connecting by soldering at least two pads (P1, P2, P3, P4) separated the one from the other on said branch (B1, B2, B3, B4).

## Patentansprüche

1. Vorrichtung (D) zur Regelung der Belüftung an Bord von Fahrzeugen, wobei die Vorrichtung mindestens eine Steuereinheit (C) umfasst, die mit mindestens einem Steuerelement (E) eines Belüftungssystems eines Fahrzeugs und mit mindestens einer Belüftungsvorrichtung (V) des Systems verbunden werden kann, wobei die Steuereinheit (C) Mittel zur Erzeugung eines Ausgangsstroms (Iₒᵤₜ) zur Versorgung der Belüftungsvorrichtung (V) in Abhängigkeit von mindestens einem Eingangssignal (Sᵢₙ), das von dem Steuerelement (E) stammt, aufweist,
die Vorrichtung **dadurch gekennzeichnet, dass** die Vorrichtung mindestens eine Einstelleinheit (S) umfasst, die mit der Steuereinheit (C) verbunden und konfiguriert ist, um den Ausgangsstrom (lout) in Abhängigkeit von dem Mindeststrom, der erforderlich ist, um die Belüftungsvorrichtung (V) zu versorgen, und in Abhängigkeit von dem Maximalstrom, der durch die Belüftungsvorrichtung (V) absorbierbar ist, einzustellen, wobei die Einstelleinheit (S) umfasst:
- eine Erzeugungsleistungsschaltung (S2) zum Erzeugen eines Referenzstroms (I_{ref});
- eine Korrekturleistungsschaltung (S1), die mit der Erzeugungsleistungsschaltung (S2) verbunden ist und mindestens zwei Zweige (B1, B2, B3, B4) umfasst, die normalerweise offen und parallel zueinander angeordnet sind, wobei jeder der Zweige (B1, B2, B3, B4) einen elektrischen Widerstand (R1, R2, R3, R4) mit voneinander verschiedenen Werten und Schließmittel (P1, P2, P3, P4) des Zweigs (B1, B2, B3, B4) hat, wobei mindestens einer der Zweige (B1, B2, B3, B4) ausgebildet ist, durch die Schließmittel (P1, P2, P3, P4) geschlossen zu werden, um den Referenzstrom (I_{ref}) in Abhängigkeit von dem zur Versorgung der Belüftungsvorrichtung (V) erforderlichen Mindeststrom und dem von der Belüftungsvorrichtung absorbierbaren Maximalstrom zu variieren;
- eine Vergleichsleistungsschaltung (S3) zum Vergleichen des Ausgangsstroms (lout) und des Referenzstroms (I_{ref}), die mit der Erzeugungsleistungsschaltung (S2) des Referenzstroms (I_{ref}) und mit der Steuereinheit (C) verbunden ist, wobei die Vergleichsleistungsschaltung (S3) Mittel zum Variieren des Ausgangsstroms (Iₒᵤₜ) in Abhängigkeit von der zwischen dem Ausgangsstrom (lout) und dem Referenzstrom (I_{ref}) ermittelten Differenz umfasst.

2. Vorrichtung (D) nach Anspruch 1, **dadurch gekennzeichnet, dass** die Erzeugungsleistungsschaltung (S2) des Referenzstroms (I_{ref}) mindestens einen Zweig (B5) mit einem elektrischen Widerstand (R5) von vorbestimmtem Wert umfasst, der parallel zu dem mindestens einen Zweig (B1, B2, B3, B4) der Korrekturleistungsschaltung (S1) angeordnet ist.

3. Verfahren zum Einstellen der Belüftung an Bord von Fahrzeugen, wobei das Verfahren den Schritt des Erzeugens mindestens eines Ausgangsstroms (Iₒᵤₜ) für die Versorgung einer Belüftungsvorrichtung (V) des Belüftungssystems eines Fahrzeugs in Abhängigkeit von mindestens einem Eingangssignal (Sᵢₙ), das von einem Steuerelement (E) des Systems kommt, mittels mindestens einer Steuereinheit (C) umfasst, die mit dem Steuerelement (E) und der Belüftungsvorrichtung (V) verbunden ist,
das Verfahren **gekennzeichnet durch** die folgenden Schritte:
- Messen des Ausgangsstroms (lout);
- Vergleichen des Ausgangsstroms (Iₒᵤₜ) mit dem Minimalstrom, der zur Versorgung der Belüftungsvorrichtung (V) erforderlich ist, und mit dem Maximalstrom, der von der Belüftungsvorrichtung (V) absorbiert werden kann;
- Korrigieren des Ausgangsstroms (lout) in Abhängigkeit dem minimal erforderlichen Strom und dem maximal absorbierbaren Strom mittels mindestens einer Einstelleinheit (S) der Steuervorrichtung;
- Erzeugen von mindestens einem Referenzstrom (I_{ref});
- Schließen mindestens eines Zweigs (B1, B2, B3, B4), der normalerweise offen ist, einer Korrekturleistungsschaltung (S1) der Einstelleinheit (S) zum Variieren des Referenzstroms (I_{ref}) in Abhängigkeit von dem minimal erforderlichen Strom und dem maximal absorbierbaren Strom, wobei die Korrekturleistungsschaltung (S1) mindestens zwei Zweige (B1, B2, B3, B4) umfasst, die normalerweise offen und parallel zueinander angeordnet sind, wobei jeder der Zweige (B1, B2, B3, B4) einen elektrischen Widerstand (R1, R2, R3, R4) mit voneinander verschiedenen Werten aufweist;
- Erfassen der Differenz zwischen dem Ausgangsstrom (lout) und dem Referenzstrom (I_{ref});
- Variieren des Ausgangsstroms (Iₒᵤₜ) in Abhängigkeit von der erfassten Differenz.

4. Verfahren nach Anspruch 3, **dadurch gekennzeichnet, dass** der Schritt des Schließens des mindestens einen Zweiges (B1, B2, B3, B4) das Verbinden durch Löten von mindestens zwei voneinander getrennten Kontaktstellen (P1, P2, P3, P4) auf dem Zweig (B1, B2, B3, B4) umfasst.

## Revendications

1. Dispositif (D) d'ajustement de ventilation à bord de véhicules, le dispositif comprenant au moins une unité de commande (C) pouvant être reliée à au moins un élément de commande (E) d'un système de ventilation sur un véhicule et à au moins un dispositif de ventilation (V) dudit système, ladite unité de commande (C) ayant des moyens de génération pour générer un courant de sortie (Iₒᵤₜ) pour alimenter ledit dispositif de ventilation (V) en fonction d'au moins un signal d'entrée (Sᵢₙ) provenant dudit élément de commande (E), le dispositif étant **caractérisé en ce que** le dispositif comprend au moins une unité d'ajustement (S) reliée à ladite unité de commande (C) et configurée pour ajuster ledit courant de sortie (Iₒᵤₜ) en fonction du courant minimal requis pour alimenter ledit dispositif de ventilation (V) et du courant maximal absorbable par ledit dispositif de ventilation (V), dans lequel ladite unité d'ajustement (S) comprend :
- un circuit de puissance de génération (S2) pour générer un courant de référence (I_{ref}) ;
- un circuit de puissance de correction (S1) relié audit circuit de puissance de génération (S2) et comprenant au moins deux branches (B1, B2, B3, B4) normalement ouvertes et agencées parallèlement l'une à l'autre, dans lequel chacune desdites branches (B1, B2, B3, B4) a une résistance électrique (R1, R2, R3, R4) de valeurs différentes les unes des autres et des moyens de fermeture (P1, P2, P3, P4) de la branche (B1, B2, B3, B4), dans lequel au moins l'une desdites branches (B1, B2, B3, B4) est configurée pour être fermée par l'intermédiaire desdits moyens de fermeture (P1, P2, P3, P4) pour faire varier ledit courant de référence (I_{ref}) en fonction du courant minimal requis pour alimenter ledit dispositif de ventilation (V) et du courant maximal absorbable par ledit dispositif de ventilation ;
- un circuit de puissance de comparaison (S3) pour comparer ledit courant de sortie (Iₒᵤₜ) et ledit courant de référence (I_{ref}), relié audit circuit de puissance de génération (S2) du courant de référence (I_{ref}) et à ladite unité de commande (C), dans lequel ledit circuit de puissance de comparaison (S3) comprend des moyens pour faire varier ledit courant de sortie (Iₒᵤₜ) en fonction de ladite différence trouvée entre ledit courant de sortie (Iₒᵤₜ) et ledit courant de référence (I_{ref}).

2. Dispositif (D) selon la revendication 1, **caractérisé en ce que** ledit circuit de puissance de génération (S2) du courant de référence (I_{ref}) comprend au moins une branche (B5) ayant une résistance électrique (R5) de valeur prédéterminée agencée parallèlement à ladite au moins une branche (B1, B2, B3, B4) du circuit de puissance de correction (S1).

3. Procédé d'ajustement de ventilation à bord de véhicules, le procédé comprenant l'étape de génération d'au moins un courant de sortie (Iₒᵤₜ) pour l'alimentation d'un dispositif de ventilation (V) du système de ventilation d'un véhicule, en fonction d'au moins un signal d'entrée (Sᵢₙ) provenant d'un élément de commande (E) dudit système, au moyen d'au moins une unité de commande (C) reliée audit élément de commande (E) et audit dispositif de ventilation (V),
le procédé étant **caractérisé par** les étapes de :
- mesure dudit courant de sortie (Iₒᵤₜ) ;
- comparaison dudit courant de sortie (Iₒᵤₜ) au courant minimal requis pour alimenter ledit dispositif de ventilation (V) et au courant maximal absorbable par ledit dispositif de ventilation (V) ;
- correction dudit courant de sortie (Iₒᵤₜ) en fonction dudit courant minimal requis et dudit courant absorbable maximal, au moyen d'au moins une unité d'ajustement (S) dudit dispositif de commande ;
- génération d'au moins un courant de référence (I_{ref}) ;
- fermeture d'au moins une branche (B1, B2, B3, B4) normalement ouverte d'un circuit de puissance de correction (S1) de ladite unité d'ajustement (S) pour faire varier ledit courant de référence (I_{ref}) en fonction dudit courant minimal requis et dudit courant absorbable maximal, dans lequel ledit circuit de puissance de correction (S1) comprend au moins deux branches (B1, B2, B3, B4) normalement ouvertes et agencées parallèlement l'une à l'autre, chacune desdites branches (B1, B2, B3, B4) ayant une résistance électrique (R1, R2, R3, R4) de valeurs différentes les unes des autres ;
- détection de la différence entre ledit courant de sortie (Iₒᵤₜ) et ledit courant de référence (I_{ref}) ;
- variation dudit courant de sortie (Iₒᵤₜ) en fonction de ladite différence détectée.

4. Procédé selon la revendication 3, **caractérisé en ce que** ladite étape de fermeture de ladite au moins une branche (B1, B2, B3, B4) comprend le raccordement par soudure d'au moins deux pastilles (P1, P2, P3, P4) séparées l'une de l'autre sur ladite branche (B1, B2, B3, B4).
